# EUROPEAN PATENT SPECIFICATION

(11) **EP 1 424 651 B1**
(45) Date of publication and mention of the grant of the patent: **22.03.2006**
(21) Application number: 03078693.3
(22) Date of filing: 24.11.2003
(51) Int. Cl.: G06K 19/04, B65D 25/20, B65D 19/38

(54) **Transponder in plastic carrier device**
Transponder in Kunststofftragebehälter
Porte-articles en plastique avec un transpondeur

(30) Priority: 26.11.2002 GB 0227483
(43) Date of publication of application: 02.06.2004
(73) Proprietor: D W Plastics N.V., 3740 Bilzen (BE)
(72) Inventor: Wambeke, Alain Marcel, 3440 Zoutleeuw (BE)
(74) Representative: Beitsma, Gerhard Romano

(56) References cited:
- WO-A-01/29761
- WO-A-01/44061
- WO-A-93/24381
- DE-A- 19 510 458
- GB-A- 2 294 846
- US-B1- 6 302 461

## Description

The present invention relates to a transponders in plastic carrier devices. More in particular, the present invention relates to a method of providing a plastic carrier device in which a transponder is accommodated, and to a carrier device made of a plastic material in which a transponder is accommodated.

Carrier devices such as a (bottle) crates and pallets are widely used for storing, supporting and/or transporting various articles such as bottles, boxes, kegs, etc. Traditionally such carrier devices are made of wood. However, these days carrier devices are mostly made of plastic materials such as high density polyethylene (HDPE). Such plastic materials are usually more durable than wood and also more resistant to moisture. In addition, carrier devices made of plastic are easier to clean and more hygienic as they are less likely to have cracks and seams.

Transpoiiders are generally used for identifying objects. They are capable of providing an electromagnetic identification signal upon receipt of an electromagnetic "challenge" signal. The identification signal may contain various data, such as the owner of the object on which the transponder is attached, the type of any goods contained in the object, a date, etc. The use of transponders greatly facilitates the handling of carrier devices such as crates or pallets as the carrier devices can be quickly identified, even from some distance. In this respect, transponders are generally preferred over bar codes which can only be read at a small distance.

There are several types of transponders, such as "card-type" transponders and "nail-type" transponders. The former are mounted on a small card, usually the size of a credit card, whereas the latter are generally cylindrical.

European Patent Application EP 0 535 919, for example, discloses a nail-type transponder for use in wooden objects. Another example of a nail-type transponder for use in kegs is disclosed in German Patent Application DE 195 10 458.

It is further known to accommodate a transponder in a carrier device such as a (bottle) crate or a pallet made of a plastic material. Various ways have been devised for conveniently locating and fastening the transponder in the carrier device.

French Patent Application FR 2 697 801 discloses a nail-type transponder which is accommodated in hollow support member of a pallet made of plastic in correspondence with the preamble of Claim 1. To this end, a hole is drilled in the pallet, the support being filled with foam to support the transponder. A cap is used to close the hole after the transponder is inserted.

European Patent Application EP 0 994 041 discloses a plastic carrier or "transport" device provided with a card-type transponder. The transponder is accommodated in a cover glued or welded to the carrier device. Alternatively, the transponder is accommodated in a cavity in the device, which cavity is closed off with a lid.

European Patent Application EP 0 619 246 discloses a transport container having a transponder in the base plate of the container. The transponder may be glued in a cut-out or covered by a lid holding it in place.

International Patent Application WO 01/44061 discloses a plastic container for the transport and/or storage of goods. A card-type transponder is integrated in a wall of the container by injection moulding. Integrating a transponder in this way has the disadvantage that during production of the container, the transponder is exposed to high temperatures and pressures, which may cause damage to the transponder.

All these Prior Art solutions require either the use of an additional component, such as a lid, or an additional processing step, such as welding or gluing, whereas some require both. However, additional components and/or processing steps add to the cost of the carrier device, which of course is undesirable.

It is therefore an object of the present invention to provide a carrier device as set out above in which a transponder can be held firmly in place

It is another object of the present invention to provide a carrier device as set out above in which the provision of a transponder requires a minimum amount of additional parts or processing steps.

It is a further object of the present invention to provide a carrier device as set out above in which a transponder is not exposed to high temperatures or pressures and is mechanically protected.

Accordingly, the present invention provides a method of providing a plastic carrier device in which a transponder is accommodated, the method comprising the steps of:
- accommodating the transponder in a casing so as to form a transponder unit,
- producing the carrier device from a plastic material,
- providing a cavity in the carrier device, and
- inserting the transponder unit in said cavity,
characterised in that
- the transponder unit is dimensioned to as fit tightly in said cavity, and in that
- the transponder unit is inserted in said cavity while the carrier device is warm.

That is, the casing of the transponder is designed such that the transponder unit can be easily inserted into the cavity when the carrier device is warm or hot but it has little clearance. Then, when the carrier device cools down it shrinks slightly, thus clamping the transponder unit in place.

Thus the present invention utilizes the natural shrinking of plastic materials when cooling down to firmly clamp the transponder unit in the carrier device. It is not necessary to use glue or to weld the transponder unit to the carrier device.

Advantageously, the transponder unit is inserted in said cavity while the carrier device has a temperature of at least 30° C, preferably at least 40° C. The actual temperature will of course depend on the particular plastic material used and the values given are suitable for high density polyethylene.

In a preferred embodiment, the carrier device is produced by a process involving heating, such as an injection moulding process, and the transponder unit is inserted in said cavity before the carrier device has substantially cooled down. Although the thus produced carrier device typically remains warm for approximately two hours, it is preferred that the transponder unit is inserted in said cavity within an hour after the completion of said process, more preferably within 30 minutes. However, it is also possible to heat a plastic carrier device that has already cooled down or that was manufactured using a process which resulted in the carrier device not becoming hot enough to utilize the shrinking of the material.

Although the cavity can be drilled in the carrier device, it is preferably pre-formed. That is, in a moulded device the cavity is formed by a suitable shape of the mould. This eliminates the processing step of drilling a hole, thus reducing manufacturing costs.

The transponder unit used in the present invention may have a substantially circular cross-section, for example being a so-called nail transponder unit. However, it may also have a substantially rectangular cross-section, for example being a card-type transponder. If the cross-section is rectangular, the casing of the transponder unit may have a slideable lid allowing access to the transponder. However, snap-fit lids or welded lids can also be envisaged, as are embodiments in which the transponder casing has no lid.

The transponder casing, and therefore the transponder unit, may have a substantially smooth exterior. However, in an advantageous embodiment the transponder unit is provided with barbs. This ensures an even better fixation of the transponder unit in the cavity.

A carrier device according to the present invention may be a crate having side walls extending from the base member, the cavity preferably being accommodated in a side wall. Alternatively, a carrier device according to the present invention may be a pallet having side faces extending from the base member, the cavity preferably being accommodated in a side face of the base member.

The present invention will further be explained below with reference to the accompanying drawings, in which:
Fig. 1 schematically shows, in perspective, part of a crate according to a first embodiment of the present invention.
Fig. 2 schematically shows, in perspective, part of the embodiment of Fig. 1 in more detail.
Fig. 3 schematically shows, in perspective, part of a crate according to a second embodiment of the present invention.
Fig. 4 schematically shows, in perspective, part of the embodiment of Fig. 3 in more detail.
Fig. 5 schematically shows, in side view, an embodiment of a transponder unit for use in the present invention.

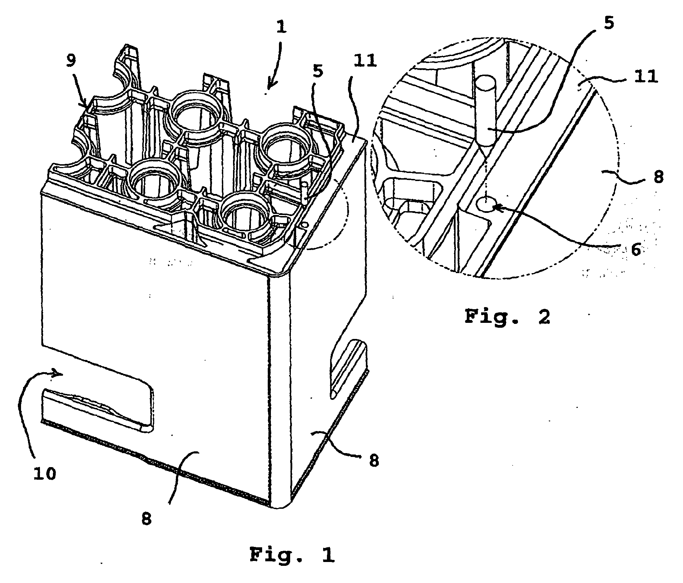

The bottle crate 1 shown merely by way of non-limiting example in Fig. 1 (as well as subsequent embodiments according to the present invention) is preferably formed of a thermoplastic or other polymeric material and is preferably, but not necessarily, formed by an injection moulding process. Engineered materials may be used, as well as a synthetic resin such as polyethylene or polypropylene with a filler added to stiffen the resin. It is contemplated that the pallet disclosed herein may be manufactured by various other moulding techniques and manufacturing processes applicable to the design and material selected, including but not limited to blow moulding, thermoforming, vacuum moulding, etc. It is further contemplated that the material from which the pallet according to the present invention is formed may include materials other than plastics and polymer blends, and may include metallic materials, such as aluminium or tin.

The crate 1 of Fig. 1 comprises a base member 9 from which side walls 8 extend. For the sake of clarity, the crate 1 is shown upside-down and only part of the crate 1 is shown in Fig. 1. The side walls 8 are provided with handle openings 10. In the embodiment shown a border 11 is provided underneath (in the drawing above) the side walls 8, adjacent the base member 9. In a preferred embodiment, this border 11 bridges two panels of the hollow side walls 8. According to an aspect of the present invention, the space between the side wall panels can advantageously be used for protectedly accommodating a transponder.

In the embodiment of Figs. 1 and 2, a cavity 6 is provided in a side wall 8, extending away from the plane of the base member 9, through the border 11. This cavity is, in the preferred embodiments, moulded in the crate 1, as a result of which no additional process step is necessary for providing such a cavity. In the embodiment shown the cavity 6 is substantially cylindrical so as to accommodate a substantially cylindrical transponder unit 5, that is, a "nail-type" transponder unit. The transponder unit 5 may comprise a casing in which a transponder (not shown) is accommodated. The casing may be closed off with a lid or cap. Such transponder units are known *per se.* Suitable transponder units of this kind typically operate at a frequency of approximately 125 kHz, having a length of approximately 30 mm and a diameter of approximately 6 mm.

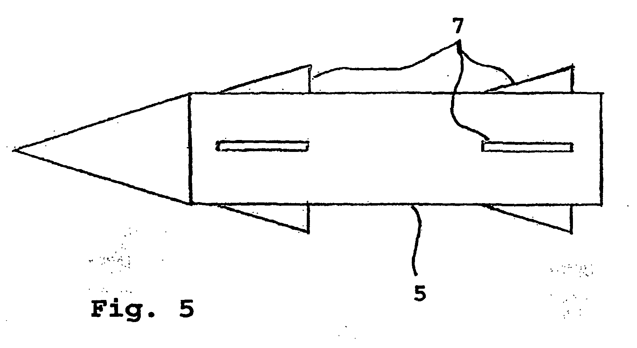

A particularly advantageous embodiment of a nail-type transponder unit is shown in Fig. 5 where the transponder unit 5 is provided with barbs 7 to provide an enhanced engagement of the unit in the cavity (6 in Figs. 1 and 2). It will be understood that these barbs 7 are optional and that transponder units having a smooth exterior can also be employed.

In accordance with the present invention, the outer dimensions of the transponder unit 5 (that is, of its casing) closely match the inner dimensions of the cavity 6. In particular, the diameter of the cavity 6 is preferably slightly smaller at room temperature than the diameter of the transponder unit 5 at the same temperature, that is, when the crate has cooled down after moulding. During the moulding process, however, the inner dimensions of the cavity 6 are slightly larger than the outer diameter of the transponder unit 5, making it easy to insert the transponder unit 5 when the crate 1 is still hot. When cooling down, the plastic material of the crate 1 shrinks, thus firmly clamping the transponder unit 1 in the cavity.

Although it is possible to re-heat the crate, it is preferred to insert the transponder unit 5 in the cavity 6 within an hour of the crate leaving the mould, preferably within approximately 30 minutes, so as to utilize the heat still present in the crate and to be able to insert the transponder unit before the crate has finished shrinking. The temperature of the crate upon insertion of the transponder unit is at least 30° C, preferably at least 40° C. However, for many plastic materials the temperature at which the transponder unit is inserted preferably does not exceed 50° C as above this temperature the plastic material may be too soft.

After insertion of the transponder unit a lid or plug (not shown) may be welded or glued into place to close off the cavity and thereby to provide additional mechanical protection. Applying a lid or plug is, however, not essential and the cavity may be left open as the transponder unit is held firmly in place.

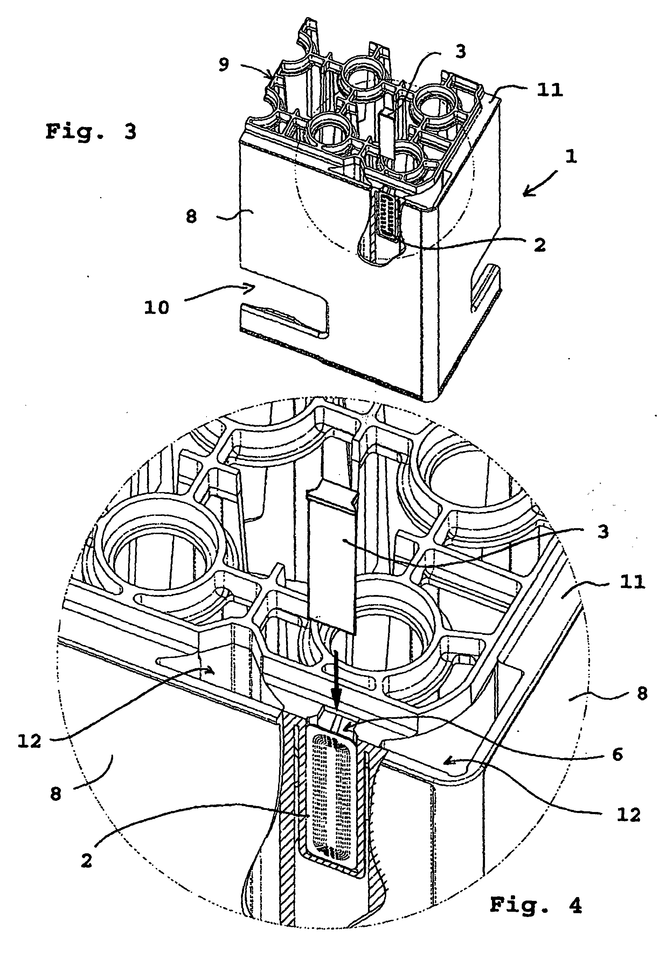

In the embodiment of Figs. 3 and 4 a "card-type" transponder 2 is used. Such transponders are known *per se* and typically operate at a frequency of 13.56 MHz. A substantially rectangular cavity 6 is provided, the cavity traversing the border 11 and extending into a side wall 8 which is shown in a partial cut-away view for clarity. In the embodiment shown, the transponder 2 is first inserted in the cavity 6 and then a casing 3 is inserted, thus enclosing the transponder 2. Alternatively, the transponder 2 could first be inserted in the casing 3 so as to form a transponder unit (5 in Fig. 1) and to then insert the entire transponder unit in the cavity. In both cases, the transponder casing (and hence the transponder unit) can be held firmly in place by inserting it into the cavity while the crate 1 is hot or at least warm, as explained above. The dimensions of the transponder casing, which is preferably made of a plastic material, are chosen such that a good fit results. The transponder casing 3 shown in Figs. 3 and 4 has an opening at one end, allowing the transponder 2 to be inserted. In alternative embodiments the transponder casing may have a lid, for instance a sliding lid which provide access to the interior of the casing.

Although a plastic transponder casing may be fixed to the crate by welding or gluing, for example using an epoxy adhesive, it is preferred to clamp the casing by means of the natural shrinkage of the plastic material of the crate. However, an adhesive may be used in addition to the shrinkage clamping.

In an alternative embodiment the transponder unit is not inserted in a cavity specifically designed for this purpose but in a recess (12 in Fig. 4) which is already present in many plastic crates. The transponder or transponder unit may be fixed to the interior of a recess 12.

The crate 1 of Figs. 1-4 is shown to have an open structure, resulting in an open base member 9. However, crates according to the present invention can also be provided with a closed base member (bottom surface) as may be desirable for some applications. In most embodiments having a closed surface the reinforcement ribs shown in Figs. 1-4 will still be present to provide structural rigidity.

The present invention is based upon the insight that the natural shrinkage of many plastic materials when cooling down can advantageously be used to securely clamp a transponder unit in a carrier device such as a crate or a pallet. The present invention is additionally based upon the insights that mechanical protection should be provided for a transponder in a carrier device, and that the transponder should not be exposed to extreme temperatures and pressures. As a consequence, Prior Art techniques in which the transponder is "in-moulded" should be avoided.

Other carrier devices than crates and pallets can be envisaged in which the present invention can be employed, such as plastic kegs, boxes etc. Also, other materials than those mentioned above may be used to still obtain the advantages of the present invention. The transponder may be substituted with another device, such as a radio transmitter.

It will therefore be understood by those skilled in the art that the present invention is not limited to the embodiments illustrated above and that many modifications and additions may be made without departing from the scope of the invention as defined in the appending claims.

## Claims

1. A method of providing a plastic carrier device (1) in which a transponder (2) is accommodated, the method comprising the steps of:
• accommodating the transponder (2) in a casing (3) so as to form a transponder unit (5),
• producing the carrier device (1) from a plastic material,
• providing a cavity (6) in the carrier device, and
• inserting the transponder unit (5) in said cavity (6),
**characterised in that**
• the transponder unit (5) is dimensioned to as fit tightly in said cavity (6), and **in that**
• the transponder unit (5) is inserted in said cavity (6) while the carrier device (1) is warm, so that the transponder unit (5) is firmly clamped when the carrier device (1) has cooled down.

2. The method according to claim 1, wherein the transponder unit (5) is inserted in said cavity (6) while the carrier device (1) has a temperature of at least 30° C, preferably at least 40° C.

3. The method according to claim 1 or 2, wherein the carrier device (1) is produced by a process involving heating, such as an injection moulding process, and wherein the transponder unit (5) is inserted in said cavity before the carrier device (1) has substantially cooled down, preferably within an hour after the completion of said process, more preferably within 30 minutes.

4. The method according to any of the preceding claims, wherein the cavity (6) is pre-formed in the carrier device.

5. The method according to any of the preceding claims, wherein the transponder unit (5) has a substantially circular cross-section, preferably being a so-called nail-type transponder unit.

6. The method according to any of claims 1-4, wherein the transponder unit (5) has a substantially rectangular cross-section.

7. The method according to claims 6, wherein the casing (3) of the transponder unit (5) has a slideable lid.

8. The method according to any of the preceding claims, wherein the transponder unit (5) is provided with barbs.

9. A carrier device (1) provided according to the method of any of the preceding claims which is a crate having side walls (8) extending from a base member (9), the cavity (6) preferably being accommodated in a side wall (8).

10. A carrier device provided according to the method of any of claims 1-8 which is a pallet having side faces extending from a deck member, the cavity preferably being accommodated in a side face.

## Patentansprüche

1. Verfahren zum Bereitstellen einer Tragvorrichtung (1) aus Kunststoff, in der ein Transponder (2) untergebracht ist, wobei das Verfahren die folgenden Schritte aufweist:
• Unterbringen des Transponders (2) in einem Gehäuse (3) zur Bildung einer Transpondereinheit (5),
• Herstellen der Tragvorrichtung (1) aus einem Kunststoff,
• Vorsehen eines Hohlraums (6) in der Tragvorrichtung, und
• Einführen der Transpondereinheit (5) in diesen Hohlraum (6),
**dadurch gekennzeichnet, dass**
• die Transpondereinheit (5) derart bemessen ist, dass sie in diesem Hohlraum (6) dicht anliegt und dass
• die Transpondereinheit (5) in diesen Hohlraum (6) eingebracht wird, während die Tragvorrichtung (1) warm ist, so dass nach Abkühlen der Tragvorrichtung (1) die Transpondereinheit (5) fest eingespannt ist.

2. Verfahren nach Anspruch 1, **dadurch gekennzeichnet, dass** die Transpondereinheit (5) in diesen Hohlraum (6) eingebracht wird, während die Tragvorrichtung (1) eine Temperatur von mindestens 30 °C, vorzugsweise mindestens 40 °C hat.

3. Verfahren nach Anspruch 1 oder 2, **dadurch gekennzeichnet, dass** die Tragvorrichtung (1) nach einem den Vorgang des Erwärmens umfassenden Verfahren, zum Beispiel im Spritzgießverfahren, hergestellt wird, und dass die Transpondereinheit (5) in diesen Hohlraum eingebracht wird, bevor die Tragvorrichtung (1) im Wesentlichen abgekühlt ist, vorzugsweise innerhalb einer Stunde, besonders bevorzugt innerhalb von 30 Minuten nach Beendigung dieses Verfahrens.

4. Verfahren nach einem der vorangegangenen Ansprüche, **dadurch gekennzeichnet, dass** der Hohlraum (6) in der Tragvorrichtung vorgeformt ist.

5. Verfahren nach einem der vorangegangenen Ansprüche, **dadurch gekennzeichnet, dass** die Transpondereinheit (5) einen im Wesentlichen kreisförmigen Querschnitt hat und vorzugsweise eine sogenannte Nagel-Transpondereinheit ist.

6. Verfahren nach einem der Ansprüche 1 bis 4, **dadurch gekennzeichnet, dass** die Transpondereinheit (5) einen im Wesentlichen rechteckigen Querschnitt hat.

7. Verfahren nach Anspruch 6, **dadurch gekennzeichnet, dass** das Gehäuse (3) der Transpondereinheit (5) einen verschiebbaren Deckel hat.

8. Verfahren nach einem der vorangegangenen Ansprüche, **dadurch gekennzeichnet, dass** die Transpondereinheit (5) mit Widerhaken versehen ist.

9. Tragvorrichtung (1), bereitgestellt nach dem Verfahren nach einem der vorangegangenen Ansprüche, wobei die Tragvorrichtung eine Kiste mit von einem Bodenelement (9) sich erstreckenden Seitenwänden (8) ist, wobei der Hohlraum (6) vorzugsweise in einer Seitenwand (8) untergebracht ist.

10. Tragvorrichtung, bereitgestellt nach dem Verfahren nach einem der Ansprüche 1 bis 8, wobei die Tragvorrichtung eine Palette mit von einer Tragfläche sich erstreckenden Seitenflächen ist, wobei der Hohlraum vorzugsweise in einer Seitenfläche untergebracht ist.

## Revendications

1. Procédé pour fournir un dispositif porteur (1) dans lequel est logé un transpondeur (2), le procédé comprenant les étapes suivantes :
• on loge le transpondeur (2) dans un boîtier (3) de manière à former une unité transpondeur (5),
• on réalise le dispositif porteur (1) à partir d'une matière plastique,
• on prévoit une cavité (6) dans le dispositif porteur, et
• on insère l'unité transpondeur (5) dans cette cavité (6),
**caractérisé en ce que**
• l'unité transpondeur (5) est dimensionnée de manière à s'emboîter dans cette cavité (6) et que
• l'unité transpondeur (5) est insérée dans cette cavité (6) alors que le dispositif porteur (1) est chaud de sorte que l'unité transpondeur (5) est solidement encastrée une fois le dispositif porteur (1) refroidi.

2. Procédé selon la revendication 1, **caractérisé en ce que** l'unité transpondeur (5) est insérée dans cette cavité (6) alors que le dispositif porteur (1) a une température d'au moins 30 °C, de préférence d'au moins 40 °C.

3. Procédé selon la revendication 1 ou 2, **caractérisé en ce que** le dispositif porteur (1) est réalisé au moyen d'un procédé employant la chaleur, par exemple un procédé de moulage par injection, et que l'unité transpondeur (5) est insérée dans la cavité avant que le dispositif porteur (1) ait sensiblement refroidi, de préférence dans l'heure, voire de préférence dans les 30 minutes qui suivent la fin du procédé.

4. Procédé selon l'une quelconque des revendications précédentes, **caractérisé en ce que** la cavité (6) est préformée dans le dispositif porteur.

5. Procédé selon l'une quelconque des revendications précédentes, **caractérisé en ce que** l'unité transpondeur (5) a une section transversale sensiblement circulaire et est de préférence un transpondeur dit du type clou.

6. Procédé selon l'une quelconque des revendications 1 à 4, **caractérisé en ce que** l'unité transpondeur (5) a une section transversale sensiblement rectangulaire.

7. Procédé selon la revendication 6, **caractérisé en ce que** le boîtier (3) de l'unité transpondeur (5) a un couvercle coulissant.

8. Procédé selon l'une quelconque des revendications précédentes, **caractérisé en ce que** l'unité transpondeur (5) est munie de pointes.

9. Dispositif porteur (1) fourni conformément au procédé selon l'une quelconque des revendications précédentes, ce dispositif étant une caisse avec des parois latérales (8) qui s'étendent à partir d'un élément de base (9), la cavité (6) étant de préférence ménagée dans une paroi latérale (8).

10. Dispositif porteur fourni conformément au procédé selon l'une quelconque des revendications 1 à 8, ce dispositif étant une palette avec des faces latérales qui s'étendent à partir d'une surface porteuse, la cavité étant de préférence ménagée dans une face latérale.
